# EUROPEAN PATENT APPLICATION

(11) **EP 4 636 538 A1**
(43) Date of publication of application: **22.10.2025**
(21) Application number: 25162620.6
(22) Date of filing: 10.03.2025
(51) Int. Cl.: G06F 1/3203, G06F 1/3212

(54) **ELECTRONIC APPARATUS AND CONTROL METHOD FOR ELECTRONIC APPARATUS**

(30) Priority: 15.04.2024 JP 2024065570
(71) Applicant: Lenovo (Singapore) Pte. Ltd., New Tech Park 556741 (SG)
(72) Inventor: YAMASAKI, Seiji, Yokohama-shi, 220-0012 (JP); KAWAKAMI, Jumpei, Yokohama-shi, 220-0012 (JP); LIN, Cheng-Tien, 104050 Taipei City (TW); LIU, Chihsiu, 104050 Taipei City (TW); CHIU, Yen Jung, 104050 Taipei City (TW)
(74) Representative: Openshaw & Co.

(57) **Abstract**

To reduce power consumption in a sleep state, an electronic apparatus that switches between an operating state and a sleep state includes a controller that executes polling to periodically check a state of a battery when the electronic apparatus is in the operating state, and controls execution of the polling based on a notification signal output from the battery when the electronic apparatus is in the sleep state.

## Description

### BACKGROUND OF THE INVENTION

### Field of the Invention

The present invention relates to an electronic apparatus and a control method for an electronic apparatus.

### Description of the Related Art

One of the standards for computer power management is Advanced Configuration and Power Interface (ACPI) (see, for example, Japanese Unexamined Patent Application Publication No. 2023-047293). ACPI defines the power states (S0 to S5) of devices. The typical power states defined by ACPI are as follows. In S0, the computer is in an operating state. In S1 and S2, the computer is in a standby state. In S3, the computer is in a sleep (standby) state. In S4, the computer is in a hibernation state. In S5, the computer is in a shutdown state. A function called Modern Standby (hereafter referred to as ModS) or S0i3 may also be implemented in the computer as a sleep state.

Computers include batteries. Computers need to monitor the state of the battery in order to check the remaining amount, etc. of the battery (see, for example, Japanese Unexamined Patent Application Publication No. 2023-067854). One method of monitoring the battery state is called polling. In this method, an embedded controller or a central processing unit (CPU) periodically communicates with the battery to monitor the state of the battery.

### SUMMARY OF THE INVENTION

When the computer is in a sleep state, the embedded controller or the CPU can stop functioning. However, the embedded controller or the CPU needs to be periodically activated in order to execute polling. This increases power consumption in the sleep state.

The present invention has an object of providing an electronic apparatus and a control method for an electronic apparatus that can reduce power consumption in a sleep state.

One aspect of the present invention is an electronic apparatus that switches between an operating state and a sleep state, the electronic apparatus including a controller that executes polling to periodically check a state of a battery when the electronic apparatus is in the operating state, and controls execution of the polling based on a notification signal output from the battery when the electronic apparatus is in the sleep state.

In one aspect of the present invention, the notification signal may be in one of a first state and a second state, the controller may execute the polling if the notification signal is in the first state, and the controller may not execute the polling if the notification signal is in the second state.

In one aspect of the present invention, the electronic apparatus may include the battery, the battery may output the notification signal in the first state each time a remaining amount of the battery decreases by a first reference amount set in advance, and after outputting the notification signal in the first state, the battery may output the notification signal in the second state.

In one aspect of the present invention, the electronic apparatus may include the battery, the battery may output the notification signal in the second state when a remaining amount of the battery is greater than a second reference amount set in advance, and the battery may output the notification signal in the first state when the remaining amount of the battery falls to or below the second reference amount.

In one aspect of the present invention, the electronic apparatus may include the battery, the battery may output the notification signal in the second state when the battery is in a normal state, and the battery may output the notification signal in the first state when the battery is in an abnormal state.

In one aspect of the present invention, the electronic apparatus may include a power circuit that is connectable to an external power source and outputs power supplied from the external power source to the battery, the controller may execute the polling regardless of the notification signal when the external power source is connected to the power circuit, and the controller may control the execution of the polling based on the notification signal when the electronic apparatus is in the sleep state with the external power source not connected to the power circuit.

One aspect of the present invention is a control method for an electronic apparatus that switches between an operating state and a sleep state, the control method including: a step of executing polling to periodically check a state of a battery when the electronic apparatus is in the operating state; and a step of controlling execution of the polling based on a notification signal output from the battery when the electronic apparatus is in the sleep state.

The above-described aspects of the present invention can reduce power consumption in a sleep state.

### BRIEF DESCRIPTION OF THE DRAWINGS

FIG. 1 is a diagram illustrating an example of the hardware structure of an electronic apparatus according to an embodiment.
FIG. 2 is a diagram illustrating an example of the functional structure of the electronic apparatus according to the embodiment.
FIG. 3 is a timing chart illustrating an example of the waveform of a notification signal in the embodiment.
FIG. 4 is a flowchart illustrating an example of the operation of the electronic apparatus according to the embodiment.
FIG. 5 is a flowchart illustrating an example of the operation of the electronic apparatus according to the embodiment.

### DETAILED DESCRIPTION OF THE INVENTION

An embodiment of the present invention will be described below with reference to the drawings.

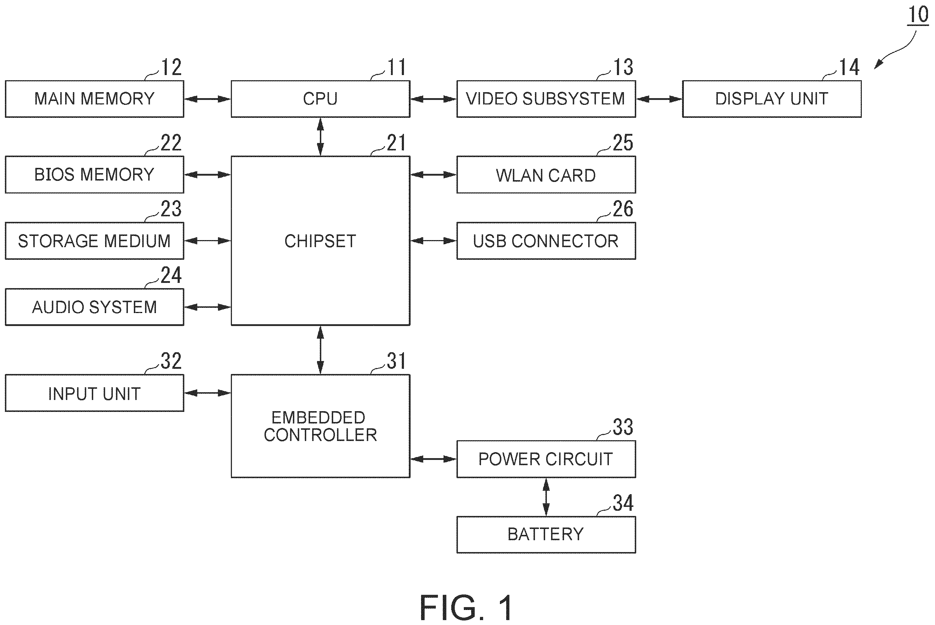

An example of the hardware structure of an electronic apparatus 10 according to an embodiment will be described with reference to FIG. 1. FIG. 1 is a block diagram illustrating an example of the hardware structure of the electronic apparatus 10.

The electronic apparatus 10 includes a CPU 11, a main memory 12, a video subsystem 13, a display unit 14, a chipset 21, a BIOS memory 22, a storage medium 23, an audio system 24, a wireless local area network (WLAN) card 25, a Universal Serial Bus (USB) connector 26, an embedded controller 31, an input unit 32, a power circuit 33, and a battery 34.

The CPU 11 executes various arithmetic processes under program control, and controls the overall electronic apparatus 10. For example, the CPU 11 executes processes based on the programs of an operating system (OS) and Basic Input/Output System (BIOS). The CPU 11 is an example of a processor.

The main memory 12 is a writable memory used as an area for reading execution programs of the CPU 11 or a work area for writing processed data of the execution programs. For example, the main memory 12 is made up of a plurality of dynamic random access memory (DRAM) chips. The execution programs include the OS, various drivers for operating hardware of peripherals, various services/utilities, application programs, and the like.

The video subsystem 13 is a subsystem for implementing functions relating to image display, and includes a video controller. The video controller processes a drawing instruction from the CPU 11, and writes the processed drawing information to a video memory. The video controller also reads the drawing information from the video memory, and outputs it to the display unit 14 as drawing data (display data).

The display unit 14 is, for example, a liquid crystal display or an organic EL display, and displays a display screen based on the drawing data (display data) output from the video subsystem 13.

The chipset 21 includes controllers such as USB, Serial AT Attachment (ATA), Serial Peripheral Interface (SPI) bus, Peripheral Component Interconnect (PCI) bus, PCI-Express bus, and Low Pin Count (LPC) bus, and is connected to a plurality of devices. For example, the plurality of devices include the below-described BIOS memory 22, storage medium 23, audio system 24, WLAN card 25, USB connector 26, and embedded controller 31.

The BIOS memory 22 is, for example, composed of an electrically rewritable non-volatile memory such as electrically erasable programmable read only memory (EEPROM) or flash ROM. The BIOS memory 22 stores the BIOS, system firmware for controlling the embedded controller 31, etc., and the like. The BIOS memory 22 is an example of a sub-memory.

The storage medium 23 includes a hard disk drive (HDD), a solid state drive (SSD), and the like. For example, the storage medium 23 stores the OS, various drivers, various services/utilities, application programs, and various data.

The audio system 24 is connected to a microphone and speaker (not illustrated), and records, reproduces, and outputs sound data. The microphone and speaker are included in the electronic apparatus 10, for example.

The WLAN card 25 connects to a network via a wireless LAN, to perform data communication. For example, upon receiving data from the network, the WLAN card 25 generates an event trigger indicating the reception of the data. The USB connector 26 is a connector for connecting peripherals using USB.

The input unit 32 collectively refers to input devices (input equipment) included in the electronic apparatus 10. The input unit 32 includes a keyboard, a mouse, and the like. The input unit 32 outputs input information input by a user's operation to the embedded controller 31.

The power circuit 33 includes, for example, a DC/DC converter, a charge/discharge unit, and an AC/DC adapter. For example, the power circuit 33 converts a DC voltage supplied from an external power source such as an AC adapter (not illustrated) or the battery 34 into a plurality of voltages necessary to operate the electronic apparatus 10. The power circuit 33 supplies power to each part in the electronic apparatus 10 based on control by the embedded controller 31.

The battery 34 is, for example, a secondary battery such as a lithium-ion battery. When power is supplied to the electronic apparatus 10 from an external power source, the battery 34 is charged via the power circuit 33. When power is not supplied to the electronic apparatus 10 from the external power source, the battery 34 outputs the stored power via the power circuit 33 as operating power for the electronic apparatus 10.

The embedded controller 31 is a one-chip microcomputer that monitors and controls various devices (peripherals, sensors, etc.) regardless of the system state of the electronic apparatus 10. The embedded controller 31 includes a CPU, a ROM, and a RAM, as well as A/D input terminals, D/A output terminals, timers, and digital input and output terminals of a plurality of channels (not illustrated). The digital input and output terminals of the embedded controller 31 are connected to the input unit 32, the power circuit 33, and the like, and the embedded controller 31 controls their operations. The embedded controller 31 also controls, for example, changes to the clock frequency of the CPU 11 via the chipset 21.

The electronic apparatus 10 may have a display device integrally attached to the chassis, like a clamshell personal computer, a tablet terminal, or a portable apparatus such as a smartphone. Alternatively, the electronic apparatus 10 may have a display device separated from the apparatus body, like a desktop personal computer. The electronic apparatus according to this embodiment is applicable to all apparatuses that include a CPU.

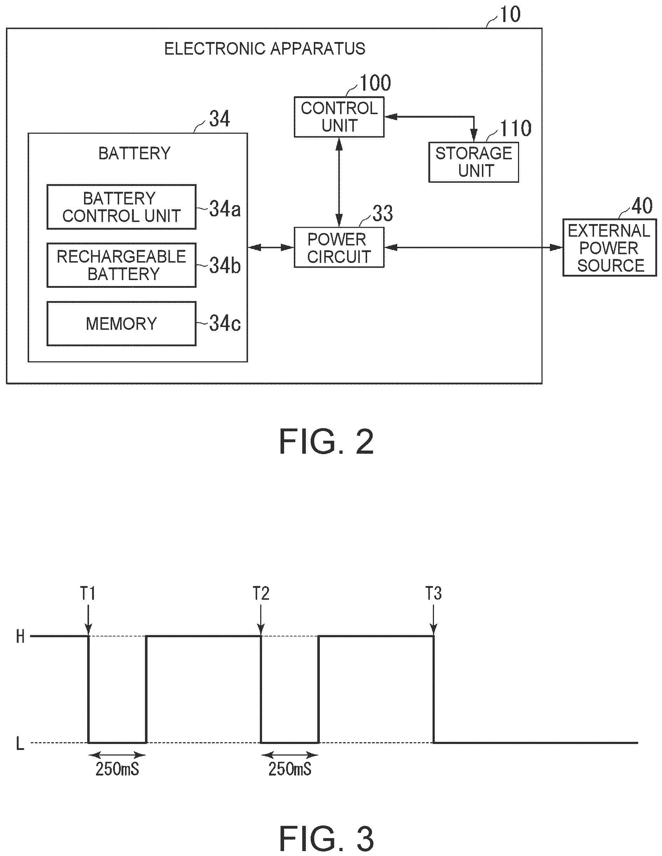

An example of the functional structure of the electronic apparatus 10 will be described with reference to FIG. 2. FIG. 2 is a block diagram illustrating an example of the functional structure of the electronic apparatus 10 relating to power state control.

The electronic apparatus 10 includes a control unit 100, a storage unit 110, the power circuit 33, and the battery 34. The functions of the control unit 100 are achieved by the CPU 11, the embedded controller 31, or a combination of the CPU 11 and the embedded controller 31.

The storage unit 110 stores programs executed by the control unit 100, data used by the control unit 100, data generated by the control unit 100, and so on. The functions of the storage unit 110 are achieved by the main memory 12, the storage medium 23, or a combination of the main memory 12 and the storage medium 23.

When an external power source 40 is connected to the power circuit 33, the power circuit 33 outputs power supplied from the external power source 40 to the battery 34. When the external power source 40 is not connected to the power circuit 33, the power circuit 33 outputs power supplied from the battery 34 to each part in the electronic apparatus 10.

The control unit 100 controls the power state of the electronic apparatus 10 according to the remaining amount (remaining capacity) of the battery 34. The power state of the electronic apparatus 10 is set to one of S0 (operating state), ModS (sleep state), S4 (hibernation state), and S5 (shutdown state). ModS may be S0i3. When the electronic apparatus 10 is in S0, the control unit 100 executes polling to periodically check the state of the battery 34. When the electronic apparatus 10 is in ModS, the control unit 100 controls the execution of polling based on a notification signal output from the battery 34. Switching between S0 and ModS is performed according to, for example, the user's instruction.

The battery 34 includes a battery control unit 34a, a rechargeable battery 34b, and a memory 34c. The rechargeable battery 34b is a secondary battery. The battery control unit 34a monitors the state of the rechargeable battery 34b according to firmware recorded in the memory 34c. The memory 34c includes a ROM in which the firmware is recorded, and a RAM in which the remaining amount of the rechargeable battery 34b and the like are stored.

The battery control unit 34a outputs a notification signal having a voltage level according to the state of the rechargeable battery 34b. The notification signal has high level (H) or low level (L). The notification signal is input to the control unit 100 via the power circuit 33.

FIG. 3 illustrates an example of the waveform of the notification signal. In a usual state, the notification signal is high level. Each time the remaining amount of the rechargeable battery 34b decreases by a first reference amount, the notification signal changes to low level. For example, the first reference amount is 1% of the full charge capacity. The first reference amount is recorded in the ROM in the memory 34c. At timing T1 when the remaining amount of the rechargeable battery 34b decreases by the first reference amount, the notification signal changes to low level. The notification signal is maintained at low level for a predetermined period (for example, 250 ms) from timing T1, and then returns to high level.

At timing T2 when the remaining amount of the rechargeable battery 34b decreases by the first reference amount from the remaining amount at timing T1, the notification signal changes to low level. The notification signal is maintained at low level for a predetermined period (for example, 250 ms) from timing T2, and then returns to high level.

At timing T3, the remaining amount of the rechargeable battery 34b falls to or below a second reference amount set in advance. For example, the second reference amount is 5% or 2% of the full charge capacity. The second reference amount is recorded in the ROM in the memory 34c. The notification signal changes to low level at timing T3, and thereafter is maintained at low level. The notification signal also changes to low level when an abnormality such as a temperature abnormality occurs.

In this embodiment, the battery 34 outputs a notification signal of low level. Thus, the battery 34 can activate the control unit 100 that is in the sleep state. When the notification signal of low level is output, the control unit 100 checks the state of the battery 34. When the remaining amount of the battery 34 is low or some kind of abnormality occurs in the battery 34, the control unit 100 executes polling to avoid abnormal shutdown. This can reduce power consumption in the sleep state compared to the case where polling is constantly executed.

In the foregoing example, the first reference amount related to the decrease in the remaining amount of the rechargeable battery 34b is 1% of the full charge capacity. The first reference amount is set so that the time required for the remaining amount of the rechargeable battery 34b to decrease by the first reference amount will be longer than the polling execution interval (polling interval).

Personal computers have various operation modes, and the interval suitable for checking the state of the battery 34 varies depending on the operation mode. The capacity of the ROM in the battery 34 is limited, and it is difficult to record various conditions for checking the state of the battery 34 in the ROM in the battery 34.

In this embodiment, when the electronic apparatus 10 is in the sleep state, the control unit 100 controls the execution of polling based on the notification signal output from the battery 34. In particular, when the external power source 40 is not connected to the power circuit 33 and the electronic apparatus 10 is in the sleep state, the control unit 100 controls the execution of polling based on the notification signal. This can reduce power consumption in the sleep state. When the external power source 40 is connected to the power circuit 33 or when the electronic apparatus 10 is in a power state other than the sleep state, the control unit 100 executes usual polling.

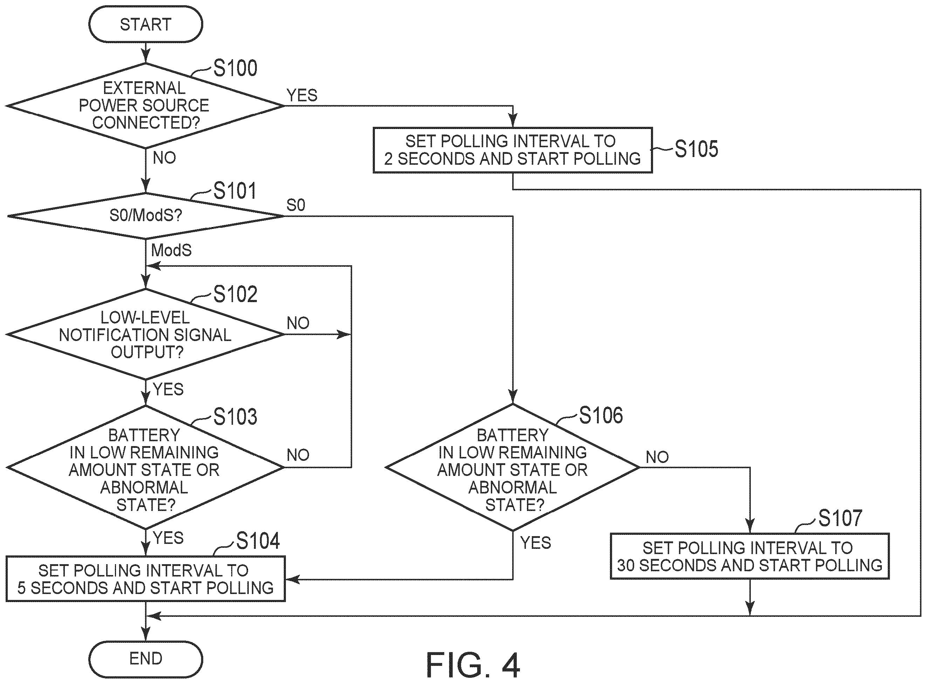

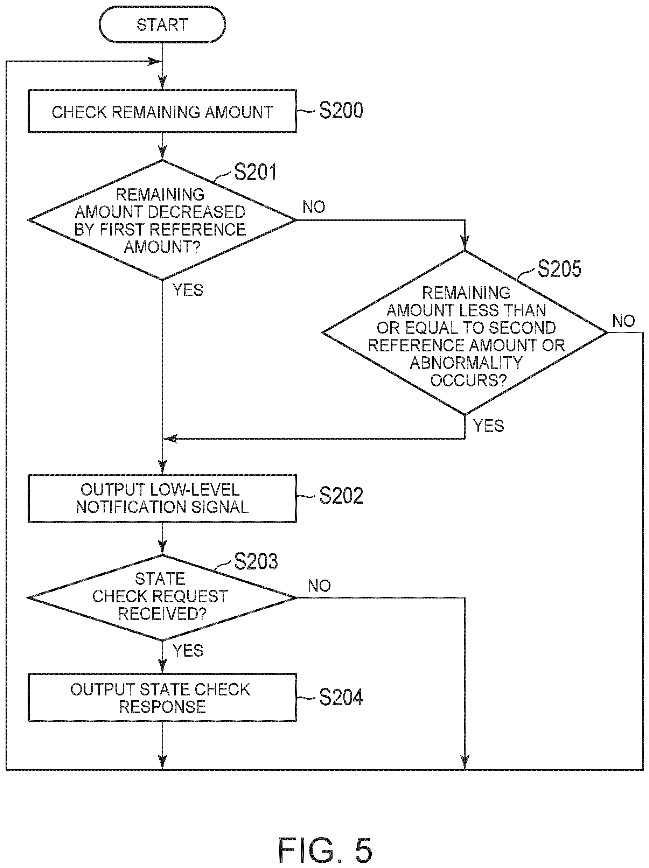

The operation of the electronic apparatus 10 will be described with reference to FIGS. 4 and 5. FIG. 4 illustrates an example of processing executed by the control unit 100.

(Step S100) The control unit 100 monitors the state of the power circuit 33 and determines whether the external power source 40 is connected to the power circuit 33.

(Step S101) If the external power source 40 is not connected to the power circuit 33, the control unit 100 checks the power state of the electronic apparatus 10.

(Step S102) When the electronic apparatus 10 is in ModS, the control unit 100 stops functioning. While a notification signal of high level (high-level notification signal) is output from the battery 34, the control unit 100 maintains its stopped state. When a notification signal of low level (low-level notification signal) is output from the battery 34, the control unit 100 is activated.

(Step S103) The control unit 100 outputs a state check request to check the state of the battery 34, to the battery 34. The control unit 100 receives a state check response output from the battery 34, and determines the state of the battery 34 based on the state check response. The state check response includes information indicating the state of the battery 34. For example, the state check response includes information indicating the remaining amount of the battery 34 and information indicating whether an abnormality occurs in the battery 34.

If the remaining amount of the battery 34 is greater than the second reference amount set in advance and the battery 34 is in a normal state, the control unit 100 stops functioning. After this, the electronic apparatus 10 transitions to the state in step S102.

(Step S104) If the remaining amount of the battery 34 is less than the second reference amount or the battery 34 is in an abnormal state, the control unit 100 sets the polling interval to 5 seconds and starts polling. After this, the same processing as usual polling is executed.

(Step S105) If the external power source 40 is connected to the power circuit 33, the control unit 100 sets the polling interval to 2 seconds and starts polling. After this, the same processing as usual polling is executed.

(Step S106) When the electronic apparatus 10 is in S0, the control unit 100 outputs a state check request to check the state of the battery 34, to the battery 34. The control unit 100 receives a state check response output from the battery 34, and determines the state of the battery 34 based on the state check response.

If the remaining amount of the battery 34 is less than the second reference amount or the battery 34 is in an abnormal state, the control unit 100 sets the polling interval to 5 seconds and starts polling in step S104. After this, the same processing as usual polling is executed.

(Step S107) If the remaining amount of the battery 34 is greater than the second reference amount and the battery 34 is in a normal state, the control unit 100 sets the polling interval to 30 seconds and starts polling. After this, the same processing as usual polling is executed.

FIG. 5 illustrates an example of processing executed by the battery control unit 34a in the battery 34.

(Step S200) The battery control unit 34a checks the remaining amount of the rechargeable battery 34b. When the first remaining amount check is performed, the battery control unit 34a records the remaining amount of the rechargeable battery 34b in the memory 34c.

(Step S201) The memory 34c holds the remaining amount checked in the first remaining amount check, or the remaining amount checked when a notification signal of low level was output from the battery 34 last time. The battery control unit 34a determines whether the remaining amount checked in step S200 has decreased by the first reference amount from the remaining amount recorded in the memory 34c. For example, the first reference amount is 1% of the full charge capacity of the rechargeable battery 34b.

(Step S202) If the remaining amount of the rechargeable battery 34b has decreased by the first reference amount, the battery control unit 34a outputs a notification signal of low level. The battery control unit 34a also records the remaining amount checked in step S200 in the memory 34c.

(Step S203) After outputting the notification signal of low level, the battery control unit 34a determines whether a state check request output from the control unit 100 has been received. If the state check request has not been received, the battery control unit 34a checks the remaining amount of the rechargeable battery 34b in step S200.

(Step S204) If the state check request has been received, the battery control unit 34a checks the state of the rechargeable battery 34b and outputs a state check response including state information indicating the state. The battery control unit 34a then checks the remaining amount of the rechargeable battery 34b in step S200.

(Step S205) If the remaining amount of the rechargeable battery 34b has decreased by the first reference amount, the battery control unit 34a checks the state of the rechargeable battery 34b. If the remaining amount of the rechargeable battery 34b is less than or equal to the second reference amount or the rechargeable battery 34b is in an abnormal state, the battery control unit 34a outputs a notification signal of low level in step S202. The battery control unit 34a also records the remaining amount checked in step S200 in the memory 34c. If the remaining amount of the rechargeable battery 34b is greater than the second reference amount and the rechargeable battery 34b is in a normal state, the battery control unit 34a checks the remaining amount of the rechargeable battery 34b in step S200.

As described above, the electronic apparatus 10 switches between the operating state (S0) and the sleep state (ModS). When the electronic apparatus 10 is in the operating state, the control unit 100 (controller) executes polling to periodically check the state of the battery 34. When the electronic apparatus 10 is in the sleep state, the control unit 100 controls the execution of polling based on a notification signal output from the battery 34. Thus, the electronic apparatus 10 can reduce power consumption in the sleep state.

The notification signal is one of low level (first state) and high level (second state). If the notification signal is low level, the control unit 100 executes polling. If the notification signal is high level, the control unit 100 does not execute polling.

Each time the remaining amount of the battery 34 decreases by the first reference amount set in advance, the battery 34 outputs a notification signal of low level. After outputting the notification signal of low level, the battery 34 outputs a notification signal of high level. After the battery 34 checks that the remaining amount of the battery 34 has decreased by the first reference amount, the battery 34 outputs the notification signal of high level until the next time the battery 34 checks that the remaining amount of the battery 34 has decreased by the first reference amount.

While polling is stopped, the OS cannot obtain information about the remaining amount of the battery 34. Since the battery 34 outputs a notification signal of low level each time the remaining amount of the battery 34 decreases by the first reference amount, the OS can output a state check request to the battery 34 and obtain information about the remaining amount of the battery 34.

When the remaining amount of the battery 34 is greater than the second reference amount set in advance, the battery 34 outputs a notification signal of high level. When the remaining amount of the battery 34 falls to or below the second reference amount, the battery 34 outputs a notification signal of low level. The electronic apparatus 10 can avoid abnormal shutdown when the remaining amount of the battery 34 is low.

When the battery 34 is in a normal state, the battery 34 outputs a notification signal of high level. When the battery 34 is in an abnormal state, the battery 34 keeps outputting a notification signal of low level. The electronic apparatus 10 can avoid abnormal shutdown when an abnormality occurs in the battery 34.

The external power source 40 is connected to the power circuit 33, and the power circuit 33 outputs power supplied from the external power source 40 to the battery 34. When the external power source 40 is connected to the power circuit 33, the control unit 100 executes polling regardless of the notification signal. When the electronic apparatus 10 is in the sleep state with the external power source 40 not connected to the power circuit 33, the control unit 100 controls the execution of polling based on the notification signal. The electronic apparatus 10 can reduce power consumption in the sleep state.

Although the embodiment of the present invention has been described in detail above with reference to the drawings, the specific structures are not limited to the foregoing embodiment, and design changes and the like without departing from the gist of the present invention are also included.

### Description of Symbols

- 10: electronic apparatus
- 11: CPU
- 12: main memory
- 13: video subsystem
- 14: display unit
- 21: chipset
- 22: BIOS memory
- 23: storage medium
- 24: audio system
- 25: WLAN card
- 26: USB connector
- 31: embedded controller
- 32: input unit
- 33: power circuit
- 34: battery
- 34a: battery control unit
- 34b: rechargeable battery
- 34c: memory
- 100: control unit
- 110: storage unit

## Claims

1. An electronic apparatus configured to switch between an operating state and a sleep state, the electronic apparatus comprising a controller configured to:
execute polling to periodically check a state of a battery when the electronic apparatus is in the operating state; and
control execution of the polling based on a notification signal output from the battery when the electronic apparatus is in the sleep state.

2. The electronic apparatus according to claim 1, wherein the notification signal is in one of a first state and a second state,
wherein the controller is configured to execute the polling if the notification signal is in the first state, and
wherein the controller is configured not to execute the polling if the notification signal is in the second state.

3. The electronic apparatus according to claim 2, comprising the battery,
wherein the battery is configured to output the notification signal in the first state each time a remaining amount of the battery decreases by a first reference amount set in advance, and
wherein after outputting the notification signal in the first state, the battery is configured to output the notification signal in the second state.

4. The electronic apparatus according to claim 2, comprising the battery,
wherein the battery is configured to output the notification signal in the second state when a remaining amount of the battery is greater than a second reference amount set in advance, and
wherein the battery is configured to output the notification signal in the first state when the remaining amount of the battery falls to or below the second reference amount.

5. The electronic apparatus according to claim 2, comprising the battery,
wherein the battery is configured to output the notification signal in the second state when the battery is in a normal state, and
wherein the battery is configured to output the notification signal in the first state when the battery is in an abnormal state.

6. The electronic apparatus according to claim 1, comprising a power circuit that is connectable to an external power source and output power supplied from the external power source to the battery,
wherein the controller is configured to execute the polling regardless of the notification signal when the external power source is connected to the power circuit, and
wherein the controller is configured to control the execution of the polling based on the notification signal when the electronic apparatus is in the sleep state with the external power source not connected to the power circuit.

7. A control method for an electronic apparatus that is configured to switch between an operating state and a sleep state, the control method comprising:
a step of executing polling to periodically check a state of a battery when the electronic apparatus is in the operating state; and
a step of controlling execution of the polling based on a notification signal output from the battery when the electronic apparatus is in the sleep state.

8. The control method according to claim 7, wherein the notification signal is in one of a first state and a second state, the control method comprising:
executing the polling if the notification signal is in the first state; and
not executing the polling if the notification signal is in the second state.

9. The control method according to claim 8, wherein the electronic apparatus comprises the battery, the control method comprising:
outputting the notification signal in the first state each time a remaining amount of the battery decreases by a first reference amount set in advance, and
outputting the notification signal in the second state after outputting the notification signal in the first state.

10. The control method according to claim 8, wherein the electronic apparatus comprises the battery, the control method comprising:
outputting the notification signal in the second state when a remaining amount of the battery is greater than a second reference amount set in advance, and
outputting the notification signal in the first state when the remaining amount of the battery falls to or below the second reference amount.

11. The control method according to claim 8, wherein the electronic apparatus comprises the battery, the control method comprising:
outputting the notification signal in the second state when the battery is in a normal state, and
outputting the notification signal in the first state when the battery is in an abnormal state.

12. The control method according to claim 7, wherein the electronic apparatus comprises a power circuit that is connectable to an external power source and output power supplied from the external power source to the battery, the control method comprising:
executing the polling regardless of the notification signal when the external power source is connected to the power circuit, and
executing the polling based on the notification signal when the electronic apparatus is in the sleep state with the external power source not connected to the power circuit.
